# EUROPEAN PATENT SPECIFICATION

(11) **EP 2 256 429 B1**
(45) Date of publication and mention of the grant of the patent: **18.04.2012**
(21) Application number: 09380111.6
(22) Date of filing: 26.05.2009
(51) Int. Cl.: F24J 2/07, F24J 2/50

(54) **Solar radiation receiver comprising a quartz window system**
Solarempfänger mit Fenstersystem aus Quarz
Récepteur solaire comprenant un système de fenêtre de quartz

(43) Date of publication of application: 01.12.2010
(73) Proprietor: SENER, INGENIERIA Y SISTEMAS, S.A., 48930 Las Arenas Guecho (Vizcaya) (ES)
(72) Inventor: Villarroel Pinedo, Eduardo, 48920 Portugalete (Vizcaya) (ES)
(74) Representative: Carvajal y Urquijo, Isabel

(56) References cited:
- BE-A4- 822 340
- US-A- 4 421 102
- US-A- 4 738 310
- US-A1- 2007 157 923

## Description

### FIELD OF THE INVENTION

The present invention refers to a solar radiation receiver comprising a quartz window system for the closure and thermal insulation of the receiver hot cavity, as for instance known from US 2007/0157923.

### BACKGROUND OF THE INVENTION

US 4421102 discloses a number of quartz glass pipes disposed between a device for supplying a transparent gaseous medium and a device for exhausting the heated medium. Within each quartz glass pipe a number of glass strips, running parallel to one another, are accommodated. The adjacent glass strips are held by spacers at a distance which corresponds to the thickness of the glass strips. The glass strips are lightly tinted so that they absorb the incident radiation only partially. The coefficient of absorption of the glass strips amounts to about 0.1, so that about 90% of the incident solar radiation exits from the glass strips again and falls upon a further glass strip. In this way, the insolated energy is distributed over the entirety of the regions of the glass strips, so that all locations of the glass strips are heated evenly, and no location of the glass strips is overheated. The heat in the glass strips is transmitted to the gaseous medium flowing through inside the glass pipes and between the glass strips and is exhausted. This apparatus is particularly suitable for being disposed in a tower of a solar power plant in which the solar rays are directed at the top of the tower by means of a plurality of reflectors disposed on the ground.

### DESCRIPTION OF THE INVENTION

An aspect of the invention refers to solar radiation receiver comprising a a quartz window system for the closure of the receiver such as the one defined in the set of claims.

### BRIEF DESCRIPTION OF THE DRAWINGS

The following is a brief description of a series of drawings which will help understand the invention better relating clearly to an embodiment of said invention which is presented as a non-limiting example thereof.

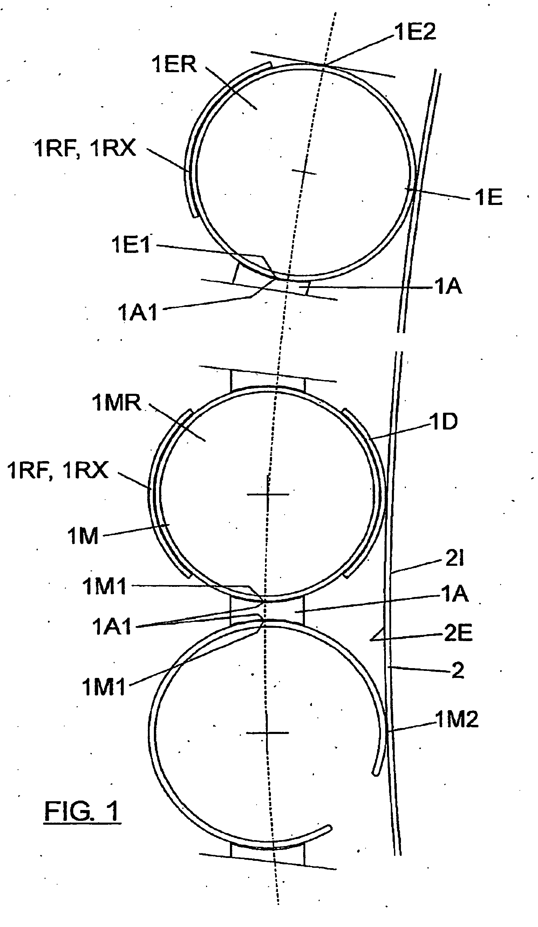

Figure 1 is a diagram of a cross section of the invention.

### DESCRIPTION OF A PREFERRED EMBODIMENT OF THE INVENTION

An embodiment of the invention refers to a solar radiation receiver comprising a quartz window system for the closure of the receiver characterized in that the quartz window system comprises:
1a) a plurality of intermediate tubes/bars (1M) and a plurality of end tubes/bars (1E) having a prismatic or cylindrical shape (the tubes offer more resistance with less weight) arranged:
   1a1) in parallel, forming a sheet with an inner face and an outer face;
   1a2) contiguously, to form a resistant structure of the sheet and to close an opening in a delimiting surface of the solar receiver;
1b) sealing means (1A) which can be made of glass fiber, since it is a material more elastic than glass, having a cross section selected between a substantially eight shape and convex lens, the sealing means (1A) being located between every two tubes/bars (1M, 1E);
   wherein:
1c) the sealing means (1A) comprise a first auxiliary generatrix (1A1) in a throat of the cross section;
1d) the intermediate tubes/bars (1M) comprise a first intermediate generatrix (1M1) in contact with the first auxiliary generatrix (1A1), to form a union wall of the sealing means (1A) with an intermediate tube/bar (1M);
1e) the end tubes/bars (1E) comprise a first external generatrix (1E1) in contact with the first auxiliary generatrix (1A1), to form a union wall of the sealing means (1A) with an end tube/bar (1 E);
1f) the end tubes/bars (1E) comprise a second external generatrix (1E2) arranged to contact in an gastight way an edge of the opening to form a union wall of an end tube/bar (1E) with the edge of the opening;
   forming the assembly a closure or sealing system.

According to other characteristics of the invention:
The tubes/bars (1M, 1E) have a cross section selected between circular and polygonal.

The tubes (1M, 1E) have an open cross section, that is, with the shape of a sector instead of a closed geometrical figure, to reduce the number of surfaces to be crossed by solar radiation. The system is planned to work at operation temperatures between room temperature at the outer face and up to 1500K at the inner face.

The tubes/bars (1M, 1E) have a geometry and dimensions arranged to withstand the pressure difference between the inner face and the outer face.

The tubes/bars (1M, 1E) have a structure with a shape selected between arch and plane arranged to absorb dilatations without loosing gas sealing.

The solar radiation receiver also comprises a flat glass pane or panel (2) enveloping the inner face arranged to cover the opening where:
6a) the flat glass pane or panel (2) comprises an inner surface (21) oriented to the receiver cavity and an outer surface (2E) oriented to the inner face of the sheet;
6b) the intermediate tubes/bars (1M) comprise a second intermediate generatrix (1M2) in contact with the outer surface (2E), to form a union wall of the flat glass pane or panel (2) with an intermediate tube/bar (1 M).

The flat glass pane or panel (2) rests on the intermediate tubes/bars (1M) to reduce possible mechanical strain in the flat glass pane or panel. It is held fast by the inner pressure in the receiver cavity.

The sealing means (1A) are arranged to be pushed against the tubes/bars (1E, 1 M) by a pressure difference between the inner face and the outer face, the geometry of the sealing means (1A) adapting itself to favour contact between the sealing means (1A) and the tubes/bars (1E, 1M), and thus reducing possible gas leaks.

The system also comprises refrigeration means (1ER, 1 MR) to refrigerate the tubes/bars (1E, 1 M) through gas flow in the interior and/or exterior of the tubes/bars (1E, 1M).

The tubes/bars (1E, 1 M) are covered, at least in part, by an antireflective layer (1RX) and/or dichroic filter (1D) at different wavelengths.

The tubes/bars (1E, 1M) are covered, at least in part, by a refractive layer (1RF) arranged to refract the solar rays in a desired direction, regardless of the behaviour of the quartz window.

## Claims

1. A solar radiation receiver comprising a quartz window system for the closure of the receiver **characterized in that** the quartz window system comprises:
1a) a plurality of intermediate tubes/bars (1M) and a plurality of end tubes/bars (1E) arranged:
1a1) in parallel forming a sheet with an inner face and an outer face;
1a2) contiguously to form a resistant structure of the sheet and to close an
opening in a delimiting surface of the solar receiver;
1b) sealing means (1A), having a cross section selected between a substantially eight shape and convex lens, the sealing means (1A) being located between every two tubes/bars (1M, 1E);
where:
1c) the sealing means (1A) comprise a first auxiliary generatrix (1A1) in a throat of the cross section;
1d) the intermediate tubes/bars (1M) comprise a first intermediate generatrix (1M1) in contact with the first auxiliary generatrix (1A1), to form a union wall of the sealing means (1A) with an intermediate tube/bar (1M);
1e) the end tubes/bars (1E) comprise a first end generatrix (1E1) in contact with the first auxiliary generatrix (1A1), to form a union wall of the sealing means (1A) with an end tube/bar (1 E);
1f) the end tubes/bars (1E) comprise a second end generatrix (1E2) arranged to contact an edge of the opening to form a union wall of the end tube/bar (1E) with the edge of the opening.

2. The solar radiation receiver according to claim 1, wherein the tubes/bars (1M, 1E) have a cross section selected between circular and polygonal.

3. The solar radiation receiver according to any of the claims 1-2, wherein the tubes (1M, 1E) have an open cross section to reduce a number of surfaces to be crossed by solar radiation.

4. The solar radiation receiver according to any of the claims 1-3, wherein the tubes/bars (1M, 1E) have a geometry and dimensions arranged to withstand the pressure difference between the inner face and the outer face.

5. The solar radiation receiver according to any of the claims 1-4, wherein the tubes/bars (1 M, 1 E) have a structure with a shape selected between arch and plane arranged to absorb dilatations without loosing gas sealing.

6. The solar radiation receiver according to any of the claims 1-5, further comprising a flat glass pane (2) enveloping the inner face arranged to cover the opening where:
6a) the flat glass pane (2) comprises an inner surface (21) oriented to the receiver cavity and an outer surface (2E) oriented to the inner face of the sheet;
6b) the intermediate tubes/bars (1 M) comprise a second intermediate generatrix (1 M2) in contact with the outer surface (2E), to form a union wall of the flat glass pane (2) with an intermediate tube/bar (1M).

7. The solar radiation receiver according to any of the claims 1-6, wherein the sealing means (1A) are arranged to be pushed against the tubes/bars (1E, 1M) by a pressure difference between the inner face and the outer face, the geometry of the sealing means (1A) adapting itself to favour contact between the sealing means (1A) and the tubes/bars (1E, 1M).

8. The solar radiation receiver according to any of the claims 1-7, further comprising refrigeration means (1ER, 1MR) to refrigerate the tubes/bars (1E, 1M) through gas flow in the interior and/or exterior of the tubes/bars (1 E, 1 M).

9. The solar radiation receiver according to any of the claims 1-8, wherein the tubes/bars (1 E, 1 M) are covered, at least in part, by an antireflective layer (1 RX) and/or dichroic filter (1D) at different wavelengths.

10. The solar radiation receiver according to any of the claims 1-9, wherein the tubes/bars (1E, 1M) are covered, at least in part, by a refractive layer (1RF) arranged to refract the solar rays in a desired direction, regardless of the behaviour of the quartz window.

## Patentansprüche

1. Sonnenstrahlungsempfänger umfassend ein Quarzfenstersystem zum Abdecken des Empfängers, **dadurch gekennzeichnet, dass** das Quarzfenstersystem Folgendes umfasst:
1a) eine Mehrzahl von Zwischenrohren/-stangen (1M) und eine Mehrzahl von Endrohren/-stangen (1 E), welche wie folgt angeordnet sind:
1a1) parallel unter Bildung einer Schicht mit einer inneren Seite und einer äußeren Seite;
1a2) angrenzend, um eine feste Struktur der Schicht zu bilden und um eine Öffnung in einer Begrenzungsoberfläche des Strahlungsempfängers abzudecken;
1b) Abdichtungsmittel (1 A), welche einen Querschnitt aufweisen, der aus einer wesentlich achtförmigen und konvexen Linse ausgewählt wird, wobei die Abdichtungsmittel (1A) zwischen jeden zweiten Rohr/jeder zweiten Stange (1 M, 1 E) angebracht sind;
wobei:
1c) die Abdichtungsmittel (1A) eine erste Hilfserzeugende (1A1) in einer Verengung des Querschnitts umfassen;
1d) die Zwischenrohre/-stangen (1 M) eine erste Zwischenerzeugende (1M1) in Kontakt mit der ersten Hilfserzeugenden (1A1) umfassen, um eine Verbindungswand der Abdichtungsmittel (1A) mit einem Zwischenrohr/einer Zwischenstange (1 M) zu bilden;
1e) die Endrohre/-stangen (1 E) eine erste Enderzeugende (1E1) in Kontakt mit der ersten Hilfserzeugenden (1A1) umfassen, um eine Verbindungswand der Abdichtungsmittel (1A) mit einem Endrohr/einer Endstange (1 E) zu bilden;
1f) die Endrohre/-stangen (1 E) eine zweite Enderzeugende (1 E2) umfassen, welche dazu angeordnet sind, einen Rand der Öffnung zur Bildung einer Verbindungswand des Endrohrs/der Endstange (1 E) mit dem Rand der Öffnung in Kontakt zu bringen.

2. Sonnenstrahlungsempfänger nach Anspruch 1, wobei die Rohre/Stangen (1M, 1 E) einen Querschnitt aufweisen, der aus einer runden und einer polygonalen Form ausgewählt wird.

3. Sonnenstrahlungsempfänger nach einem der Ansprüche 1-2, wobei die Rohre (1M, 1 E) einen offenen Querschnitt aufweisen, um eine Anzahl von durch die Sonnenstrahlung durchquerte Oberflächen zu verringern.

4. Sonnenstrahlungsempfänger nach einem der Ansprüche 1-3, wobei die Rohre/Stangen (1 M, 1 E) eine Geometrie und Abmessungen aufweisen, welche so angeordnet sind, um den Druckunterschied zwischen der inneren Seite und der äußeren Seite aushalten zu können.

5. Sonnenstrahlungsempfänger nach einem der Ansprüche 1-4, wobei die Rohre/Stangen (1 M, 1 E) eine Struktur mit einer Form aufweisen, welche aus einer Bogenform und einer flachen Form ausgewählt wird, um Ausdehnungen ohne Verlust der Gasabdichtung aufnehmen zu können.

6. Sonnenstrahlungsempfänger nach einem der Ansprüche 1-5, welcher zusätzlich eine flache Glasscheibe (2) umfasst, welche die innere Seite umgibt, um die Öffnung abzudecken, wobei:
6a) die flache Glasscheibe (2) eine innere Oberfläche (2I), welche zur Empfängerausnehmung hin gerichtet ist und eine äußere Oberfläche (2E), welche zur inneren Seite der Schicht hin gerichtet ist, umfasst;
6b) die Zwischenrohre/-stangen (1 M) eine zweite Zwischenerzeugende (1 M2) in Kontakt mit der äußeren Oberfläche (2E) umfassen, um eine Verbindungswand der flachen Glasscheibe (2) mit einem Zwischenrohr/einer Zwischenstange (1 M) zu bilden.

7. Sonnenstrahlungsempfänger nach einem der Ansprüche 1-6, wobei die Abdichtungsmittel (1A) dazu angeordnet sind, gegen die Rohre/Stangen (1E, 1 M) durch einen Druckunterschied zwischen der inneren Seite und der äußeren Seite zu drücken, wobei die Geometrie der Abdichtungsmittel (1A) selbst dazu angepasst sind, um den Kontakt zwischen den Abdichtungsmitteln (1A) und den Rohren/Stangen (1 E, 1 M) zu begünstigen.

8. Sonnenstrahlungsempfänger nach einem der Ansprüche 1-7, welcher zusätzlich Kühlmittel (1ER, 1 MR) umfasst, um die Rohre/Stangen (1 E, 1 M) durch Gasfluss zum Inneren und/oder Äußeren der Rohre/Stangen (1E, 1 M) abzukühlen.

9. Sonnenstrahlungsempfänger nach einem der Ansprüche 1-8, wobei die Rohre/Stangen (1 E, 1 M) zumindest teilweise von einem Antireflexbelag (1 RX) und/oder einem dichroitischen Filter (1D) bei verschiedenen Wellenlängen abgedeckt sind.

10. Sonnenstrahlungsempfänger nach einem der Ansprüche 1-9, wobei die Rohre/Stangen (1 E, 1 M) zumindest teilweise von einem strahlenbrechenden Belag (1RF) abgedeckt sind, um die Sonnenstrahlen in eine gewünschte Richtung, unabhängig von dem Verhalten des Quarzfensters zu brechen.

## Revendications

1. Récepteur de rayonnement solaire comprenant un système de fenêtre de quartz pour la fermeture du récepteur **caractérisé en ce que** le système de fenêtre de quartz comprend :
1a) une pluralité de tubes/barres intermédiaires (1M) et une pluralité de tubes/barres (1 E) disposés :
1a1) en parallèle en formant une feuille avec une face intérieure et une face extérieure
1a2) en continu pour former une structure résistante de la feuille et pour fermer une ouverture sur une surface de délimitation du récepteur solaire ;
1b) des moyens d'étanchéité (1A), possédant une section transversale choisie entre une forme essentiellement de huit et une lentille convexe, les moyens d'étanchéité (1A) étant situés entre chaque deux tubes/barres (1M, 1E) ;
où
1c) les moyens d'étanchéité (1A) comprennent une première génératrice auxiliaire (1A1) à l'étranglement de la section transversale ;
1d) les tubes/barres auxiliaires (1M) comprennent une première génératrice (1M1) en contact avec la première génératrice auxiliaire (1A1), pour former une paroi d'union des moyens d'étanchéité (1A) avec un tube/barre intermédiaire (1M) ;
1e) les tubes/barres (1E) comprennent une première génératrice d'extrême (1E1) en contact avec la première génératrice auxiliaire (1A1), pour former une paroi d'union des moyens d'étanchéité (1A) avec un tube/barre d'extrême (1 E) ;
1f) les tubes/barres (1E) comprennent une deuxième génératrice d'extrême (1E2) disposée pour être en contact avec un bord de l'ouverture pour former une paroi d'union du tube/barre d'extrême (1 E) avec le bord de l'ouverture.

2. Récepteur de rayonnement solaire selon la revendication 1, dans lequel les tubes/barres (1M, 1E) possèdent une section transversale choisie entre circulaire et polygonale.

3. Récepteur de rayonnement solaire selon l'une quelconque des revendications 1-2, dans lequel les tubes/barres (1M, 1 E) possèdent une section transversale ouverte pour réduire le nombre de surface à traverser par le rayonnement solaire.

4. Récepteur de rayonnement solaire selon l'une quelconque des revendications 1-3, dans lequel les tubes/barres (1M, 1E) possèdent une géométrie et des dimensions disposées pour résister la différence de pression entre la face intérieure et la face extérieure.

5. Récepteur de rayonnement solaire selon l'une quelconque des revendications 1-4, dans lequel les tubes/barres (1M, 1 E) possèdent une structure avec une forme sélectionnée entre cintrée et plate disposée pour absorber des dilatations sans perdre l'étanchéité aux gaz.

6. Récepteur de rayonnement solaire selon l'une quelconque des revendications 1-5, comprenant en outre un vitre en verre plat (2) enveloppant la face intérieure disposée pour couvrir l'ouverture où :
6a) la vitre en verre plate (2) comprend une surface intérieure (21) orientée vers la cavité de réception et une surface extérieure (2E) orientée vers la face intérieure de la feuille ;
6b) les tubes/barres intermédiaires (1 M) comprennent une deuxième génératrice intermédiaire (1 M2) en contact avec la surface extérieure (2E), pour former une paroi d'union de la vitre en verre plate (2) avec un tube/barre intermédiaire (1 M).

7. Récepteur de rayonnement solaire selon l'une quelconque des revendications 1-6, dans lequel les moyens d'étanchéité (1A) sont disposés pour être poussés contre les tubes/barres (1E, 1 M) par une différence de pression entre la face intérieure et la face extérieure, la géométrie des moyens d'étanchéité (1A) s'adaptant elle-même pour favoriser le contact entre les moyens d'étanchéité (1 A) et les tubes/barres (1E/1M).

8. Récepteur de rayonnement solaire selon l'une quelconque des revendications 1-7, comprenant en outre des moyens de refroidissement (1ER, 1 MR) pour refroidir les tubes/barres (1E/1M) à travers un flux de gaz à l'intérieur et/ou l'extérieur des tubes/barres (1E, 1M).

9. Récepteur de rayonnement solaire selon l'une quelconque des revendications 1-8, dans lequel les tubes/barres (1M, 1E) sont couverts, au moins partiellement, par une couche anti réfléchissante (1 RX) et/ou un filtre dichroïque (1 D) à différentes longueurs d'onde.

10. Récepteur de rayonnement solaire selon l'une quelconque des revendications 1-9, dans lequel les tubes/barres (1M, 1 E) sont couverts, au moins partiellement, par une couche réfléchissante (1RF) disposée pour réfracter les rayons solaires dans une direction voulue, sans tenir compte du comportement de la fenêtre de quartz.
